# EUROPÄISCHE PATENTSCHRIFT

(11) **EP 1 391 233 B1**
(45) Veröffentlichungstag und Bekanntmachung des Hinweises auf die Patenterteilung: **14.09.2005**
(21) Anmeldenummer: 03017921.2
(22) Anmeldetag: 06.08.2003
(51) Int. Cl.: B01D 46/52, B01D 29/01

(54) **Filtereinsatz**
Filter cartridge
Cartouche filtrante

(30) Priorität: 13.08.2002 DE 10237022
(43) Veröffentlichungstag der Anmeldung: 25.02.2004
(73) Patentinhaber: Carl Freudenberg KG, 69469 Weinheim (DE); Behr GmbH & Co. KG, 70469 Stuttgart (DE)
(72) Erfinder: Häfner, Uwe, 69469 Weinheim (DE); Capuani, Peter, 69483 Waldmichelbach (DE); Dobner, Roland, 69483 Waldmichelbach (DE); Felber, Uwe, 69518 Absteinach (DE); Frey, Marcus, 71404 Korb (DE); Boschert, Björn, 71254 Ditzingen-Hirschlanden (DE)

(56) Entgegenhaltungen:
- EP-A- 0 705 634
- DE-A- 10 012 731
- DE-A- 19 532 437

## Beschreibung

### Technisches Gebiet

Die Erfindung betrifft einen Filtereinsatz mit einem im Wesentlichen plattenförmigen Filterelement, welches an wenigstens zwei gegenüberliegenden Seitenflächen mit einer Dichtlasche versehen ist, deren Höhe größer ist als die Plattendicke, wobei der überstehende Teil der Dichtlasche eine Dichtlippe bildet, welche in einem den Filtereinsatz aufnehmenden Gehäuse zum Abdichten des Filtereinsatzes gegenüber dem Gehäuse unter elastischer Vorspannung dichtend an die Gehäusewandung anlegbar ist.

### Stand der Technik

Filtereinsätze der eingangs genannten Art werden für die verschiedensten Anwendungszwecke hergestellt. Beispielsweise werden sie zum Filtrieren von Frischluft für den Innenraum eines Kraftfahrzeugs benutzt. Solche Filtereinsätze weisen in der Regel plattenförmige Filterelemente auf, die aus einem zick-zack-förmig gefalteten Filterwerkstoff, beispielweise aus Papier oder Vliesstoff, bestehen. Die Filtereinsätze werden im Kraftfahrzeug in entsprechende Filtergehäuse eingesetzt, wobei gewisse Anforderungen hinsichtlich der Abdichtung der Filter gegenüber der Gehäusewandung bestehen. Die Filtereinsätze müssen in der Regel in regelmäßigen Zeitabständen ausgewechselt werden, da mit zunehmender Belegung des Filterelements mit Staub die Filterleistung merklich nachlässt.

Ein Filtereinsatz der oben beschriebenen Art ist beispielsweise aus der EP 0 705 634 A1 bekannt. Zum Abdichten des Filtereinsatzes in dem Filtergehäuse ist das Filterelement gemäß einer beschriebenen Ausführungsform an seinen beiden gegenüberliegenden Längsseiten mit einer elastischen Dichtlasche versehen, die das Filterelement an der Plattenunterseite überragt und eine Dichtlippe bildet, welche sich bei Einsetzen des Filtereinsatzes in das Gehäuse unter elastischer Vorspannung dichtend an die Gehäusewandung anlegt.

Nachteilig an dem bekannten Filtereinsatz ist, dass die Montagerichtung vorgegeben ist. Bei versehentlich falschem Einbau des Filtereinsatzes in das Gehäuse ist die Dichtfunktion nicht mehr gegeben.

Aufgabe der Erfindung ist, ein Filtereinsatz der bekannten Art so weiterzubilden, dass die Montage wesentlich vereinfacht und die Gefahr von Fehlfunktionen aufgrund von Montagefehlern herabgesetzt wird.

### Darstellung der Erfindung

Diese Aufgabe wird gelöst mit einem Filtereinsatz mit allen Merkmalen des Patentanspruchs 1. Gemäß der Erfindung ist bei einem Filtereinsatz mit einem im wesentlichen plattenförmigen Filterelement, welches an wenigstens zwei gegenüberliegenden Seitenflächen mit einer Dichtlasche versehen ist, deren Höhe größer ist als die Plattendicke, wobei der überstehende Teil der Dichtlasche eine Dichtlippe bildet, welche in einem den Filtereinsatz aufnehmenden Filtergehäuse zum Abdichten des Filtereinsatzes gegenüber dem Gehäuse unter elastischer Vorspannung dichtend an die Gehäusewandung anlegbar ist, vorgesehen, dass die Dichtlasche das Filterelement beidseitig überragt und Dichtlippen sowohl an der Plattenober- als auch an der Plattenunterseite bildet.

Der erfindungsgemäße Filtereinsatz weist damit im Gegensatz zu dem bekannten Filtereinsatz keine Zwangsdurchströmungsrichtung auf. Es existiert keine konstruktionsbedingte An- oder Abströmseite. Durch den symmetrischen Überstand der Dichtlasche über die Plattenober- bzw. -unterseite und die damit verbundene beidseitig dichtende Funktion der Dichtlaschen kann der Filtereinsatz bezüglich der An- und Abströmseite beliebig in das Filtergehäuse eingebaut werden. Die Montage wird dadurch wesentlich vereinfacht, die Gefahr von montagebedingten Fehlern herabgesetzt.

Vorzugsweise findet die vorliegende Erfindung auf die eingangs beschriebenen Filtereinsätze mit zick-zackförmig gefalteter Filterbahn aus Vliesstoff als Filterelement, so wie sie beispielsweise als Kraftfahrzeuginnenraumfilter eingesetzt werden, Anwendung. Die vorliegende Erfindung ist jedoch nicht auf diese Art von Filtereinsätzen beschränkt, sondern für alle Filtereinsätze geeignet, die im wesentlichen plattenförmig ausgestaltet und so in ein Filtergehäuse- oder in einem entsprechenden Rahmen einsetzbar sind, dass die Seitenflächen des Filterelements an die Gehäusewandung angrenzen, so dass eine Abdichtung über an den Seitenflächen angebrachte Dichtlippen erfolgen kann

Vorzugsweise besteht auch die Dichtlasche aus Vliesstoff. Dies hat den Vorteil, dass die Reibwerte zwischen Vliesstoff und Filtergehäuse deutlich geringer sind im Vergleich zu Dichtungslösungen unter Verwendung von Dichtschäumen. Besonders bevorzugt wird ein Vliesstoff, der als Kantenmaterial ausgeführt, in eingebautem Zustand komprimierbar ist, wodurch die Dichtwirkung des Kantenmaterials gesteigert wird, ausgezeichnete Hafteigenschaften beim stoffschlüssigen Verbinden (Verkleben und Ultraschallverschweißen) mit dem Filtermaterial besitzt und dessen Flexibilität auch in eingebautem Zustand erhalten bleibt. Der Vliesstoff besteht vorzugsweise aus Polypropylen, Polyethylen oder Polyester, weist vorzugsweise eine Dicke von ca. 1 mm - 50 mm auf und ein Flächengewicht von ca. 100-500 g/m² und ist thermisch verfestigt, vernadelt oder chemisch gebunden.

In einer weiteren bevorzugten Ausführungsform der Erfindung ist die Dichtlasche im Umknickbereich mit einer Soll-Knick-Stelle versehen. Diese kann beispielsweise durch Einritzen erzeugt werden. Durch diese Maßnahme wird insbesondere der Einbau eines Filtereinsatzes in leicht gewölbtem Zustand, so wie es beispielsweise bei Filtereinbauten in Kfz-Klimaanlagen der Fall ist, wesentlich erleichtert. Die mit der Wölbung üblicherweise einhergehende Versteifung der gebogenen Dichtlasche gegenüber einem Umbiegen wird durch das Anritzen im Umknickbereich weitgehend kompensiert. Die angeritzte Dichtlasche lässt sich auch bei einem gewölbten Filtereinsatz leicht biegen und legt sich problemlos an die Innenwandung des Gehäuses an. Die Montage wird dadurch wesentlich vereinfacht.

Das Anritzen kann sowohl vor als auch nach dem Anbringen der Dichtlasche an den Seitenflächen des Filtereinsatzes mittels Klinge, rotierendem Messer oder Ultraschall erfolgen.
Die beste Dichtwirkung wird erzielt, wenn das Filtergehäuse die mit der Dichtlasche versehene Seitenfläche des Filtereinsatzes klammer- bzw. C-förmig umschließt. Diese Ausgestaltung hat neben der oben erwähnten Richtungsunabhängigkeit beim Einbau des Filtereinsatzes noch den weiteren Vorteil der doppelten Abdichtung: Der überstehende Bereich der Dichtlasche legt sich sowohl an der Plattenober- als auch an der Plattenunterseite dichtend an das Filtergehäuse an.

Vorzugsweise findet der erfindungsgemäße Filtereinsatz Anwendung in einer Einrichtung zum Filtrieren von Frischluft für den Innenraum eines Kraftfahrzeugs, wobei die Dichtlaschen an den beiden einander gegenüberliegenden, senkrecht zur Faltenrichtung verlaufenden Längsseiten des Filterelements angeordnet sind. Der solchermaßen ausgestaltete Filtereinsatz kann beispielsweise durch einen Schlitz in der Seitenwandung eines Filtergehäuses in den Luftschacht eingeschoben, wobei der Luftschacht zweckmäßigerweise entsprechende Stege zur Ausbildung des oben beschriebenen C- oder Klammerförmigen Rahmens aufweist. Der erfindungsgemäße Filtereinsatz kann aber ebenso gut auch in ein kastenförmiges Filtergehäuse, so wie es zum Beispiel aus der EP 0 705 634 A1 bekannt ist, von oben her eingesetzt werden, wobei der Vorteil der Verdrehsicherheit gegeben ist. Die zu den Seitenflächen senkrecht angeordneten Stirnflächen des Filterelements können in an sich bekannter Weise abgedichtet werden, beipielsweise mittels einer Schwerthalterung, welche in eine Falte im Endbereich des Filterelements eingreift. Hier sind die unterschiedlichsten Ausgestaltungen denkbar.

Der erfindungsgemäß Filtereinsatz ist jedoch keinesfalls auf die oben beschriebene Anwendung beschränkt, sondern kann universell eingesetzt werden.

Nachfolgend wird die Erfindung anhand der Figuren näher erläutert.

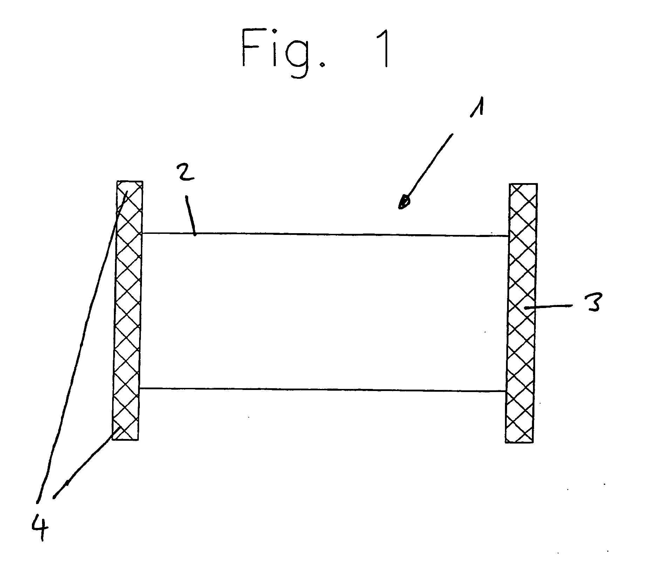

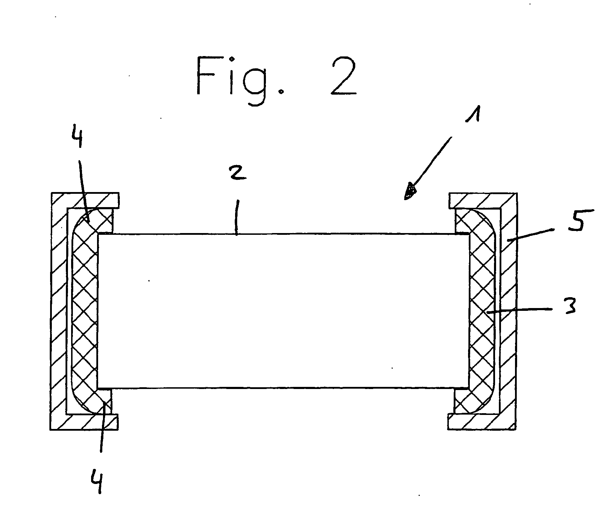

Es zeigen:
Fig. 1 in schematischer Darstellung in Seitenansicht einen Filtereinsatz gemäß der Erfindung.
Fig. 2 in schematischer Darstellung in Seitenansicht einen Filtereinsatz gemäß der Erfindung, der in ein Filtergehäuse eingesetzt ist.
   Man erkennt in Fig. 1 einen Filtereinsatz 1 mit einem plattenförmigen Filterelement 2, welches an seinen beiden Längsseiten mit Dichtlaschen 3 versehen ist. Die Dichtlaschen 3 weisen sowohl an der Plattenoberseite als auch an der Plattenunterseite einen Überstand 4 auf, der die Dichtlippen bildet. Das plattenförmige Filterelement 2 kann beispielsweise aus einer zick-zack-förmig gefalteten Filterbahn aus Vliesstoff bestehen. In Fig. 2 ist der erfindungsgemäße Filtereinsatz in ein den Filtereinsatz C-förmig umschließendes Filtergehäuse 5 eingesetzt. Man erkennt, dass sich die Dichtlippen 4 beidseitig unter elastischer Vorspannung dichtend an die Gehäusewandung des Filtergehäuses 5 anlegen.

## Patentansprüche

1. Filtereinsatz mit einem im wesentlichen plattenförmigen Filterelement, welches an wenigstens zwei gegenüberliegenden Seitenflächen mit einer Dichtlasche versehen ist, deren Höhe größer ist als die Plattendicke, wobei der überstehende Teil der Dichtlasche eine Dichtlippe bildet, welche in einem den Filtereinsatz aufnehmenden Filtergehäuse zum Abdichten des Filtereinsatzes gegenüber dem Gehäuse unter elastischer Vorspannung dichtend an die Gehäusewandung anlegbar ist, **dadurch gekennzeichnet, dass** die Dichtlasche (3) das Filterelement (2) beidseitig überragt und Dichtlippen (4) sowohl an der Plattenober- als auch an der Plattenunterseite bildet.

2. Filtereinsatz nach Anspruch 1, **dadurch gekennzeichnet, dass** das Filterelement (2) eine zick-zack-förmig gefaltete Filterbahn umfasst.

3. Filtereinsatz nach Anspruch 1 oder 2, **dadurch gekennzeichnet, dass** die Filterbahn und/oder die Dichtlasche (3) aus Vliesstoff bestehen.

4. Filtereinsatz nach einem der Ansprüche 1 bis 3, **dadurch gekennzeichnet, dass** die Dichtlasche (3) zum definierten Umlegen in eine vorgegebene Richtung im Bereich des Überstands mit einer Soll-Knickstelle versehen ist.

5. Filtereinsatz nach Anspruch 4, **dadurch gekennzeichnet, dass** die Sollknickstelle durch Anritzen der Dichtlasche (3) erzeugt wird.

6. Verwendung eines Filtereinsatzes nach einem der Ansprüche 1 bis 5 in einer Einrichtung zum Filtrieren der Frischluft für den Innenraum eines Kraftfahrzeuges.

## Claims

1. Filter insert, with an essentially plate-shaped filter element which is provided on at least two opposite side faces with a sealing tab, the height of which is greater than the plate thickness, the projecting part of the sealing tab forming a sealing lip which, in a filter housing receiving the filter insert, can be laid sealingly against the housing wall under elastic prestress in order to seal off the filter insert with respect to the housing, **characterized in that** the sealing tab (3) projects beyond the filter element (2) on both sides and forms sealing lips (4) both on the plate topside and on the plate underside.

2. Filter insert according to Claim 1, **characterized in that** the filter element (2) comprises a filter web folded in a zigzag-shaped manner.

3. Filter insert according to Claim 1 or 2, **characterized in that** the filter web and/or the sealing tab (3) cvnsist(s) of non-woven material.

4. Filter insert according to one of Claims 1 to 3, **characterized in that** the sealing tab (3) is provided, in the region of the projection, with a predetermined bending point for defined folding round into a predetermined direction.

5. Filter insert according to Claim 4, **characterized in that** the predetermined bending point is produced by scoring of the sealing tab (3).

6. use of a filter insert according to one of Claims 1 to 5 in a device for filtering the fresh air for the interior of a motor vehicle.

## Revendications

1. Cartouche de filtre présentant un élément filtrant essentiellement en forme de plaque lequel est pourvu d'une patte d'étanchéité à au moins deux surfaces latérales opposées l'une à l'autre, patte dont la hauteur est supérieure à l'épaisseur de la plaque, la partie saillante de la patte d'étanchéité formant une lèvre d'étanchéité qui peut être placée dans un corps de filtre logeant la cartouche de filtre contre la paroi dudit corps en étanchant sous une précontrainte élastique afin de rendre la cartouche de filtre étanche par rapport audit corps, **caractérisée en ce que** la patte d'étanchéité (3) dépasse des deux côtés de l'élément filtrant (2) et forme des lèvres d'étanchéité (4) non seulement sur la face supérieure de la plaque mais aussi sur la face inférieure de la plaque.

2. Cartouche de filtre selon la revendication 1, **caractérisée en ce que** l'élément filtrant (2) comporte une bande filtrante pliée en forme de zigzags.

3. Cartouche de filtre selon la revendication 1 ou la revendication 2, **caractérisée en ce que** la bande filtrante et/ou la patte d'étanchéité (3) sont constituées d'un non-tissé.

4. Cartouche de filtre selon l'une quelconque des revendications 1 à 3, **caractérisée en ce que** la patte d'étanchéité (3) est pourvue d'un endroit prescrit pour le pliage afin de rabattre de façon définie dans une direction prédéterminée dans la zone de la saillie.

5. Cartouche de filtre selon la revendication 4, **caractérisée en ce que** l'endroit prescrit pour le pliage est produit en rayant la patte d'étanchéité (3).

6. Utilisation d'une cartouche de filtre selon l'une quelconque des revendications 1 à 5, dans un dispositif de filtration d'air frais destiné à l'habitacle d'un véhicule automobile.
